# EUROPEAN PATENT APPLICATION

(11) **EP 4 319 043 A1**
(43) Date of publication of application: **07.02.2024**
(21) Application number: 22188905.8
(22) Date of filing: 05.08.2022
(51) Int. Cl.: H04L 9/32, H04L 9/40, H04W 4/50

(54) **CERTIFICATE FROM SERVER**

(71) Applicant: Koninklijke Philips N.V., 5656 AG Eindhoven (NL)
(72) Inventor: BERNSEN, Johannes Arnoldus Cornelis, Eindhoven (NL)
(74) Representative: Philips Intellectual Property & Standards

(57) **Abstract**

Thus there is provided a method and appropriately arranged devices for gaining trust in a server in a network by a client, the network comprising a server. The method comprises acquiring, by the client, a certificate of the bootstrapping server and checking whether a root certificate of a certificate chain to which the certificate belongs, or the certificate itself if it is a self-signed certificate, is in a store of trusted certificates. If the root certificate, or the certificate itself if it is a self-signed certificate, is not in the trusted store, there is checking whether the boostrapping server is local to the network, and if the server is local to the network, adding the root certificate, or the certificate itself if it is a self-signed certificate, to the store.

## Description

### FIELD OF THE INVENTION

The present invention relates to devices and methods for use in wireless networks, in particular those conforming to the IEEE 802.11 family of standards.

### BACKGROUND OF THE INVENTION

When performing TLS (Transport Layer Security, [RFC 8446]), SSL (Secure Sockets Layer [RFC 6101]), one of the security options that one can use id server-side authentication using a certificate. This means that the client device, when it contacts a server over a network, gets among other information a certificate from the server. The certificate contains a public key from the server and other information such as a IP (Internet Protocol) address of the server, URL (Uniform Resource Locator) through which the server can be found, and/or name of the server or server company, etc. All this information is digitally signed with a private signing key.

If this private signing key is the one that belongs to the public key in the certificate, the certificate is so-called self-signed. In this case, the client can check the signature on the certificate in this case using the public key of the server in the certificate.

If the private signing key belongs to another party, the public signing key that belongs to the private signing key is also mentioned in the certificate and belongs to the signed data. In this case, the client can check the signature on the certificate in this case using the public signing key in the certificate. In this case, the server uses a Public Key Infrastructure (PKI).

An important question for the client is whether or not the signing key of the certificate can be trusted. If the client trusts the signing key, it checks the signature on the certificate. If the signature is correct, it can inspect the other information in the certificate and see whether that is correct too. E.g. if the certificate contains an IP address or URL, has the server been contacted through this IP address or URL. If not, the server that sent this certificate should not be trusted. If the certificate contains a company name, the client (or its user) can check whether this company name is indeed the name of the company that the user wants to contact.

This question for the client is solved in PKI in the following way. Certain companies act as so-called Certification Authorities (CA). They have a self-signed certificate. A self-signed certificate of a CA is called a root certificate. OS (Operating System) vendors and Internet browser vendors collect root certificates that they trust and store them in a secure place in the device, such that a root certificate cannot be added or deleted without restriction. A super user has to give explicit permission for this. If an attacker can insert a root certificate of itself in a browser, the browser will trust all certificates that leads to this root certificate. This makes it possible for an attacker to get the browser to trust e.g. pirate banking sites. OS vendors and browser vendors also store certificates of intermediate CAs. The certificate of an intermediate CA is signed by a CA or by another intermediate CAs.

Therefore, in case a first certificate is not self-signed, the client searches its certificate store for a second certificate containing the public signing key. This second certificate gets checked too. If correct and if this second certificate is again one of an intermediate CA, the client searches further for a third certificate containing the second public signing key, etc. until the found certificate is a root certificate. All certificates from the server one up to the root one form a certificate chain.

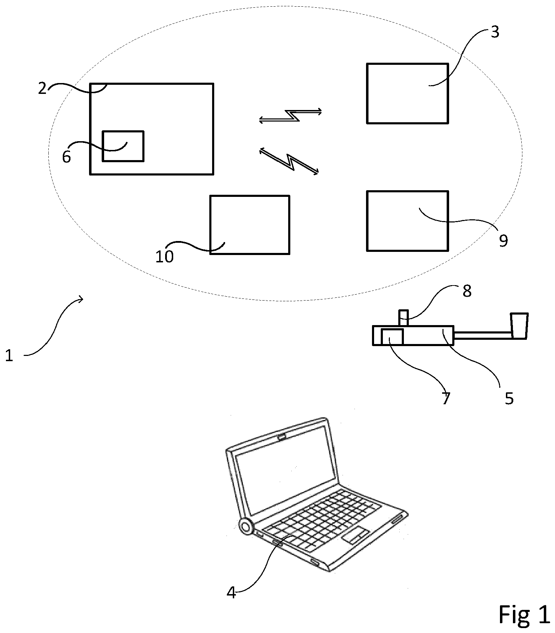

Fig.1 represents a local wireless network 1 which contains a first device 2 and another device 3, which may be a (network) printer. The first device 2 may have a central function and be like an Access Point (AP), a hub or a gateway device. The first device 2 will henceforth be referred to as an AP for simplicity though other types of device are indeed possible. The user (not shown) wishes to add two more devices to the network 1, namely a complex device 4 (here represented as a computer) and a simple device 5 (here represented as a toothbrush). Devices like the simple device 5 often do not have any real user interface (UI) other than perhaps a light and, accordingly, are often called 'headless' devices. The AP 2 has a processor 6 and the simple device 5 has a microcontroller and small non-volatile memory 7 and a button 8 which may be used to reset the simple device 5. There is also a third device 9, which may be a configurator. Lastly, there is a bootstrapping configurator 10. A server may reside in any of these devices, in particular AP 2, device 3 or device 9. The server may provide any service. In particular, AP2 and device 9 may e.g. provide a bootstrapping service and device 3 may provide something like a print service.

Some wireless networking standards allow for one device (the configurator or commissioner) to configure another (the enrollee) in order to establish a connection and communicate. This makes the task of adding, or enrolling, a new device in a network less onerous in that the user no longer has to make manual entries.

It is desirable for the configuration of a wireless network to work in a way that will permit TLS to be employed for the resulting connections between servers and devices using the service.

### SUMMARY OF THE INVENTION

Thus there is provided a method of gaining trust in a server in a network by a client, the network comprising a server, the method comprising acquiring, by the client, a certificate of the server, checking whether a root certificate of a certificate chain to which the certificate belongs, or the certificate itself if it is a self-signed certificate, is in a store of trusted certificates, if the root certificate, or the certificate itself if it is a self-signed certificate, is not in the trusted store, checking whether the server is local to the network, and if the boostrapping server is local to the network, adding the root certificate, or the certificate itself if it is a self-signed certificate, to the store.

If the server is local, it may not have access to a Certification Authority. However, being local, it is under the control of the user and therefore, may be afforded a degree of trust. By verifying that the server is local, the client may trust the server and thus may store is certificate, even in the absence of the third-party certfication. By storing the certificate in a store of trusted certificates, the client will be able to recognise the server in the future.

According to an aspect, the server is a bootstrapping server and the client is a bootstrapping configurator.

In this situation, the method may advantageously used in the commissioning/configuring of devices in a network where the bootsrapping uses a service running on a local server for bootstrapping - a bootstrapping server.

In an aspect, the method comprises performing an ownership check of the certificate to verify if the certificate belongs to the local server, and if the certificate belongs to the local server, proceeding with execution of the method otherwise aborting the excution of the method.

In the event that the client finds that the server is not local, it is useful to terminate the method at that point since trust cannot be built. Where the server is local, it is deemed trustworthy.

In an aspect, the local server is without a connection to a Certification Authority.

Even in such a situation, the method affords the building of trust.

In an aspect, the client, performs a signature check of the certificate, and, if the certificate is not a self-signed certificate, performing a signature check of all certificates in the certificate chain to which the certificate belongs and if the result of the check is that at least one of the signatures is incorrect, aborting execution of the method.

Unless all the signatures of the available certificates are correct, the client cannot be sure that even a local server can be trusted.

In an aspect, the certificate is obtained by an out-of-band (OOB) method.

The use of an OOB method increases the level of security because it allows the transfer of information that would be itself sensitive (i.e. should remain private to the devices legitimately involved) to be exchanged before the trust has been built and the encryption set up.

In an aspect, the OOB method involves a QR code or NFC.

In an aspect, there is configuring an enrollee for communication in a wireless network.

In an aspect, there is bootstrapping the enrollee by acquiring enrollee bootstrapping information by an OOB method.

In an aspect, the is execution of a protocol according to Wi-Fi Device Provisioning Protocol.

There is also provided, a configurator device according to the method described above, further arranged for running the local server and configuring a device for communications in a wireless network.

There is also provided a bootstrapping configurator device according to the method described above, further arranged for acquiring OOB bootstrapping enrollee information and communicating the enrollee bootstrapping information to a bootstrapping service.

There is also provided a computor program product arranged, when run on a computer processor, to execute the method described above.

### BRIEF DESCRIPTION OF THE DRAWINGS

The above, as well as additional objects, features and advantages of the disclosed devices, systems and methods, will be better understood through the following illustrative and non-limiting detailed description of embodiments of devices and methods, with reference to the appended drawings, in which:
Fig. 1 represents a wireless network for which it is desired to configure devices for addition.
Fig. 2 represents the flow of a configuration process according to an embodiment.
Fig. 3 represents a flow of part of a configuration process according to an embodiment.

### DETAILED DESCRIPTION OF THE EMBODIMENTS

In the following description, same references designate like elements.

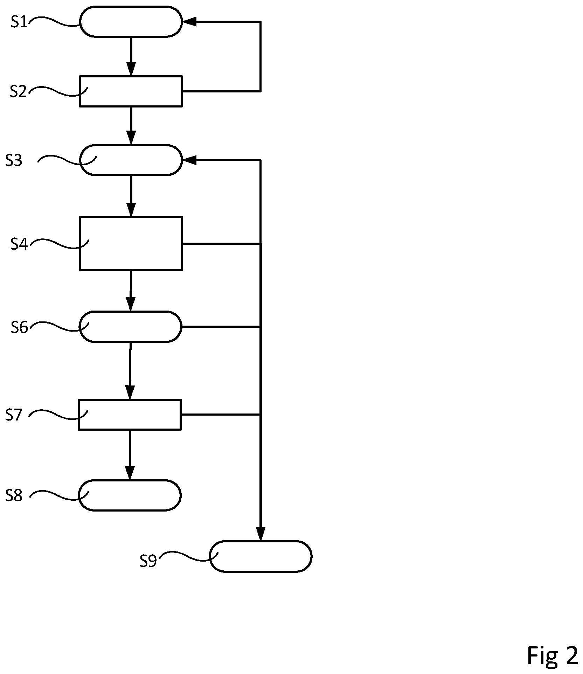

Fig. 2 represents a flow of a device-controlled configuration method according to embodiments whereby one device such as the third device 9 of fig. 1 may configure another device such as the complex or simple devices 4, 5 of fig. 1 with the effect that they can connect to the network provided by AP 2. The third device 9 and the device 4, 5 are according to embodiments. As an example, the case of the simple device 5 will be discussed. It should be understood, that though much of this description provides examples involving a network with a device like the AP 2, the process could work in a peer-to-peer situation. It should also be understood that the configurator may be co-located in AP 2.

One example of a device-controlled configuration method is the Device Provisioning Protocol (DPP) which is used in networks using Wi-Fi or IEEE 802.11. In the Device Provisioning Protocol (DPP), a device acting as a DPP configurator can securely configure any Wi-Fi enabled device for connecting to a Wi-Fi AP.

At S1, the process starts with the two devices 9 and 5 in an unconnected state and device 5 is un-configured. For the purposes of discussion, device 9 will be used to configure device 5 for joining the wireless network 1 so device 9 may be referred to as the configurator and device 5 as the enrollee (since it is being 'enrolled' in the wireless network 1).

One way for the user to make sure that a configurator and enrollee performing Diffie-Hellman, e.g. at the start of a configuration protocol such as specified in [DPP] or [WPS], are indeed the devices intended by that user is that at least one of these devices makes its public key for use in Diffie-Hellman available in a QR code, (see [DPP]). The information in the QR code contains a so-called DPP bootstrapping URI, which contains among other things the public bootstrapping key of the device to which the QR code belongs. The other device scans this QR code with its camera and uses the public key in it for Diffie-Hellman. This way, the user performing the scan is certain that her device is going to perform Diffie-Hellman with the device she scanned for its QR-code. The DPP bootstrapping URI can also be transferred by other technologies, e.g. by an NFC (Near Field Communication) touch.

There is a problem in that it is for certain devices, e.g. stationary devices like an Access Point (AP), impractical to support a camera. In the case of NFC, it may be impractical to perform an NFC touch between two stationary devices for which it is too cumbersome to move them close enough to one another. Versions of the DPP specification [DPP] have therefore specified that a configurator without a camera (or NFC interface, etc.) can advertise the so-called bootstrapping service using mDNS (multicast DNS (Domain Name Service) [RFC 6762]). Devices on the same IP network can browse these advertisements using e.g. DNS-SD (Domain Name Service - Service Discovery) [RFC 6763].

A device with a camera, called a bootstrapping configurator in [DPP], can be used to scan a QR code, browse mDNS using e.g. DNS-SD for the bootstrapping service and use that information to send the scanned public key (DPP bootstrapping URI) to the bootstrapping service through which the configurator 9 obtains this. This way, it is just as if the configurator supported a camera itself. The bootstrapping configurator can of course also acquire a DPP bootstrapping URI in any other way, e.g. by an NFC touch. A bootstrapping configurator can e.g. be implemented as an app for a smart phone. In case an AP runs a bootstrapping service, the AP as an enrollee may use this bootstrapping service (and through it, the bootstrapping configurator) for acquiring the DPP bootstrapping URI of the configurator, or the AP may also serve as a DPP configurator and use the bootstrapping service (and through it, the bootstrapping configurator) to acquire the DPP bootstrapping URIs of enrollees.

The problem for DPP is that the DPP specification mandates the bootstrapping server to have a certificate. The bootstrapping configurator can use the bootstrapping server certificate to obtain trust in the bootstrapping service (Is it a legitimate service?) and for setting up a secure, encrypted channel to send the DPP bootstrapping URIs to the configurator's bootstrapping service. In practice, the bootstrapping services will be reachable only on local networks. That means that obtaining a certificate from an (intermediate) CA is difficult and most will have to use a self-signed certificate. But how then is the bootstrapping configurator to be made to trust the certificate of a bootstrapping service? The same problem occurs for a device that runs a print service and for which print service the user wants to use TLS or SSL in order to make sure that she prints on the correct server and not on one in another home.

At S2, often referred to as 'bootstrapping', whereby one device obtains the obtains the bootstrapping public key (B_{R}) of the other device and, for the device to be configured. This is by another means than the wireless communication technology and so is commonly called 'out-of-band' communication (OOB). Examples of this can be the user causing one device to read a QR code on the Responder, NFC communication between the two device or another wireless technology e.g. Bluetooth, or by the user causing a bootstrapping configurator to acquire a DPP bootstrapping URI, e.g. by reading a QR code that contains a DPP bootstrapping URI and communicating this to the configurator, e.g. by using an HTTPS (Hypertext Transfer Protocol Secure) POST to the bootstrapping service of the configurator.

The bootstrapping process is initiated by a user intervention. If the bootstrapping has been successful, the process arrives as S3 and the devices 9, 5 are 'bootstrapped', otherwise they revert to the 'start' state at S1. In either case, the enrollee device (in this case the simple device 5) may record in an appropriate storage, for example as a flag in a register in memory, the result of the bootstrapping process. Frequently, simple devices are programmed to wake up after manufacturing or after a reset and turn on their radio on the channel indicated in their QR-code for configuration and starts listening for an authentication request message. (A non-simple device would frequently be set in this mode by its user by e.g. resetting it.)

At S4, the devices 9, 5 perform an authentication procedure whereby the devices establish 'trust' i.e. the user is able to be confident that the devices are what they believe them to be and not other unknown (and potentially malicious) devices 'pretending' to be one or other of the devices in question. A message is sent from one device requesting to start an authentication. This message can be sent by either the device doing the configuring (configurator) or the device to be configured, the enrollee. In this example, the third device 9 acts as the configurator and the simple device 5 as the enrollee. It should be noted that the third device 9 is shown as being connected to the network 1 though this is not necessarily required for the embodiments to work. The device starting the wireless communication is called the Initiator and the device responding is called the Responder. The DPP protocol, in particular, allows both a configurator and an enrollee device to act as the Initiator of the DPP protocol, whereby the other device automatically becomes the Responder. Simple devices or headless devices usually will assume the Responder role.

The other device responds to this message. If the authentication request message is decoded correctly and contains the information indicating that the Initiator is the device the user believes it to be and has the required capabilities, the response message indicates that the message has been 'accepted' and contains information needed by the Initiator to verify the credentials of the Responder and that it too has the required capabilities. If the two devices do not receive from the other device the required information, the process aborts and the device return to the bootstrapped state at S3. If the Initiator is the enrollee, the authentication request message may also contain an additional part indicating the result of a previous attempt to configure the enrollee. If the Responder is the enrollee, then the authentication response message may contain the additional part indicating the result of the previous attempt. It should be understood that the indication also indicates whether or not there has been a previous attempt.

In the case of the DPP protocol, the first message is the Authentication Request message and the response message is the DPP Authentication Response. The Responder checks the DPP Authentication Request message contains a correctly generated cryptographic hash of the Responder public bootstrapping key and whether it has a copy of the Initiator's public bootstrapping key. The responder sends a DPP Authentication Respond message indicating whether the authentication can continue. If not, because for example the attempt to decrypt an encrypted nonce in the DPP Authentication Request message fails, the process is aborted. The DPP Authentication Response contains a cryptographic hash of the Responders public bootstrapping key and may contain the hash of the Initiator public bootstrapping key. Likewise, for the Initiator, the enrollee may have obtained this public key by an OOB communication. The public bootstrapping key of the Initiator may then be used for mutual authentication. Without the public bootstrapping key of the Initiator, only the Initiator can authenticate the enrollee, but not the other way around.

If the authentication response message indicates that the Responder has accepted the authentication request message and the response meets the criteria imposed by the set-up of the Initiator, the Initiator issues an authentication confirmation message. If the authentication values in the authentication response and the confirmation message are found to be correct by the relevant devices, this part of the protocol, the authentication part, is successful, the process has reached S6 and configuration can start. The confirmation message may also contain an indication of the result of a previous configuration attempt where the enrollee is also the Initiator.

At S7, the enrollee device sends a configuration request message with information on what type of configuration the enrollee wants. If the configurator is able to grant the request, it sends a message with the information needed by the enrollee such as a network key. The process then concludes at S8 with a successful configuration of the enrollee.

In the case of DPP, the request message is the DPP Configuration Request and the configurator's response is the DPP Configuration Response message. The DPP Configuration Response may contain the service set identifier (SSID) of the network the enrollee should connect to and may contain a DPP Connector. The DPP Connector can be viewed as a certificate, digitally signed by the configurator, and contains among other thing the public network access key of the enrollee. The DPP Configuration Response message also contains the public signing key of the Configuration. Other devices that have been configured by the same configurator can thereby check whether they can trust the public network access key of other devices. The DPP Configuration Response message may also contain the Wi-Fi passphrase or Pre-Shared Key (PSK) of the network. The enrollee sends a DPP Configuration Result message (depending on the version of DPP) to the configurator to let it know whether it accepts the configuration or not. Not receiving this message by the configurator may indicate to the configurator that there was a Wi-Fi problem between the configurator and the enrollee. Then the 'supposedly configured' enrollee can send its Connector to a DPP configured AP 2. If the Connectors signature is found correct and if the AP 2 has a matching Connector, i.e. a Connector for the same network, signed by the same configurator, the AP2 sends its own Connector to the enrollee. The enrollee and the AP 2 can compute a symmetric key based on each other's network access key in the Connectors and their own private network access key in Diffie-Hellman fashion.

In case the enrollee received a Wi-Fi password or Wi-Fi Pre Shared key (PSK), the enrollee tries to associate with the AP 2 in the normal way through the 4-way handshake as specified in [802.11].

Part of the bootstrapping may be provided by a so-called bootstrapping configurator 10, as described above. In the case of using a bootstrapping configurator 10, the configurator (AP 2 or third device 9) may also run a bootstrapping service, which service it may advertise using mDNS.

In the case of a local network like that of fig. 1 the server running in device 2, 3 or 9 may, in fact be a local server. The inventor has realized that this situation presents a problem.

A local server is a server that cannot be reached from the global Internet but is restricted to a local network in a restricted area, e.g. restricted to a building, the Intranet of a company or to a home.

The URL of local servers can sometimes be found when the local network supports a local DNS (Domain Name System) server that can translate URLs to local IP (Internet Protocol) addresses. It can also be that services are advertised on the network, e.g. through mDNS (multicast DNS). In case of advertising, a device on the network can browse for a service, e.g. for a printer service. The advertisement of the (printer) service should contain information on how to reach and use the service, by containing e.g. the IP address of the service and the protocol to be used for the service or the port number on which the service listens.

If a server on a local network wants to use TLS or SSL to protect its service and needs a certificate, then this poses a problem. Getting a certificate from a (intermediate) CA means having to prove the correctness of the information that should go into the certificate. Proving the correctness of a local IP address or local URL is difficult, because the (intermediary) CA cannot reach these. In this case, the internal server could use a self-signed certificate, but how does a client (in the DPP case, a bootstrapping configurator or in the printer case, a device wanting to use the print service) know whether this certificate can be trusted? Even if a local server can be reached somehow from external e.g. from the Internet, obtaining a certificate may be too costly, especially in a home environment.

The problem is particularly acute when the bootstrapping configurator is working with the network (and hence, the local server) for the first time. The bootstrapping configurator needs to build up trust.

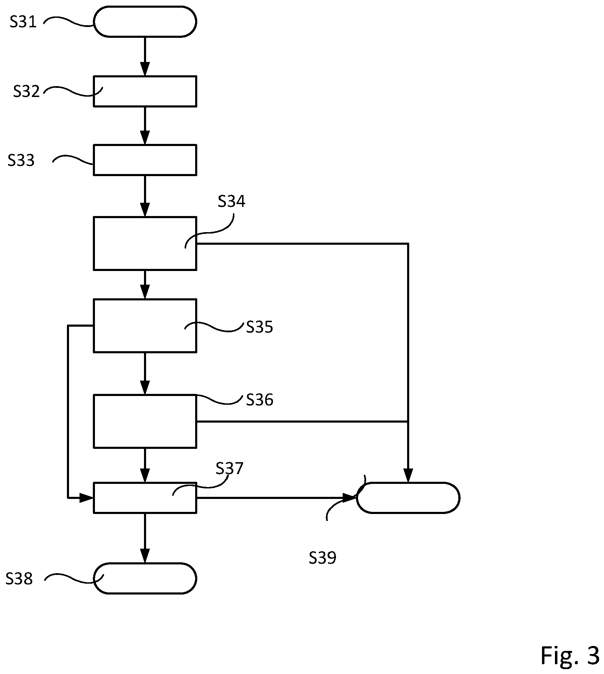

Fig. 3 shows a process flow according to an embodiment for a first-time use of a bootstrapping configurator with new bootstrapping service. An objective of the procedure is to build up trust and the bootstrapping configurator will not use the bootstrapping service if it aborts the following procedure.

At S31, the process starts. The configurator 2 or 9 running the bootstrapping service has created a self-signed certificate that may contain its IP address or URL and may contain that it is for a bootstrapping service. Creating a self-signed certificate, other certificates and certificates in a certificate chain may e.g. be done using openssl [OSSL]. The configurator 2 or 9 may also have created a root certificate for itself, which public key is used to sign a certificate that may contain its IP address or URL and may contain that the certificate is for a bootstrapping service. A root certificate is the self-signed certificate at the top of a certificate chain.

In order for users of the bootstrapping server, such as a bootstrapping configurator 10, to gain trust in the certificate of the bootstrapping server in case their store of trusted certificates does not contain the certificate itself or its root certificate, the bootstrapping server may provide its certificate in an out-of-band (OOB) manner. It may e.g. put its certificate in a QR code and show this QR code somehow, e.g. on a display or printed on its housing or in its manual. A self-signed certificate using Brainpool 512 requires about 1000 octets, which may seem a lot of data for a QR code and so seems counterintuitive. However, it still fits in a version 25 (117 ^{∗} 117) QR code. The certificate may also be made available through a short-range communication technology such as NFC or Bluetooth. In the next steps, the trustworthiness of the certificate of the bootstrapping service is going to be checked.

At S32, the bootstrapping configurator 10 helping a configurator (e.g. 2 or 9) performing the bootstrapping tries to find the configurator's bootstrapping service through mDNS. If no bootstrapping service can be found, the bootstrapping configurator aborts the process, else it notes the IP address or URL of the bootstrapping service.

At S33, the bootstrapping configurator 10 scans the QR code of the device it thinks that runs the bootstrapping service, or it uses NFC touch, and obtains the certificate. An example of this device may be a local server 2, 9 or 12.

At S34, the bootstrapping configurator 10 performs a signature check on the certificate. In case the certificate is part of a certificate chain, the signature of all certificates of the certificate chain, including that of the root certificate, are checked. If all signatures are correct, the configurator continues with the next step, else it aborts at S39.

At S35, the bootstrapping configurator 10 checks whether the certificate is self-signed or part of a certificate chain and whether or not the certificate, in case it is self-signed, or the root certificate is in its trusted certificate store. If the certificate or the root certificate is, in fact, in the store, then the process moves to S37 where the bootstrapping configurator 10 attempts to check that the certificate belongs to the bootstrapping server 2 or 9, else it continues to S36.

If the QR code contains a self-signed certificate, or it is part of a certificate chain and the certificate or the root certificate is not in its trusted certificate store, at S36, the configurator tries to determine whether or not the bootstrapping service is a local service. If it is a local service, the process proceeds to S37, else it aborts at S39.

At S37, the bootstrapping configurator 10 tries to find a URL or IP address in the certificate or other information and match this with information from the mDNS advertisement of the so-found bootstrapping service. If that matches, the configurator trusts the bootstrapping service, the certificate and that the certificate belongs to the bootstrapping service provided by server 2 or 9. The bootstrapping configurator 10 can store the certificate in its store with trusted certificates. This part of the process terminates at S38 and continues with the next steps of the configuration. If the match is not good, the configurator aborts the process at S39.

The following are examples of ways for checking at S36 whether the bootstrapping service is a local one or not.

Firstly, the bootstrapping configurator attempts to get a response of the bootstrapping service. Possible ways of doing this are the following:
- the bootstrapping configurator tries to obtain a response from the bootstrapping server with a request that is certain to fail, so the response can do no harm, e.g. inject a virus in the bootstrapping configurator. E.g., an HTTP GET to <IP address of bootstrapping server>/<some large random string> may be used for this (e.g. HTTP://1192.169.0.1/ksajfafaajhcbvjahfbejfjdfnjfdfvjj);
- the bootstrapping configurator may also try to obtain a valid response from the bootstrapping service. However, in this case, it needs to take care that the information in the server response is not used in anyway but only inspected.

Once a response has been obtained, the bootstrapping configurator may inspect the hop count in the response. If it is low enough, e.g. less than two), it deems the bootstrapping service to be a local service. The hop count is the total number of intermediate devices such as routers that data must pass from source to destination. The hop count is zero, in which case there is no intermediate device or router in between source and destination. Alternatively or additionally, the bootstrapping configurator may time the response time. If it is low enough, e.g. less than one millisecond, it deems the bootstrapping service a local service.

It may be convenient to perform the procedure of fig. 3 early on in the procedure of fig. 2, for example prior, as part of or just after S2 in fig. 2.

It may be understood that the procedure of fig. 3 can also be used for other services than a bootstrapping service. E.g. in case a client device, PC 4, wants to print, it may use mDNS to search for a printer 3 running a print service. In the same way as the bootstrapping configurator 10 obtains and builds up trust in the certificate of the bootstrapping service provided by configurator 2 or 9, is it possible for a printer client, PC 4, to obtain and build up trust in the certificate of the print service of printer 3.

Thus there is described a method of gaining trust in a local server in a network by a client, the network comprising a server, the method comprising acquiring, by the client, a certificate of the server, checking whether a root certificate of a certificate chain to which the certificate belongs, or the certificate itself if it is a self-signed certificate, is in a store of trusted certificates, if the root certificate, or the certificate itself if it is a self-signed certificate, is not in the trusted store, checking whether the local server is local to the network, and if the boostrapping server is local to the network, adding the root certificate, or the certificate itself if it is a self-signed certificate, to the store.

If the server is local, it may not have access to a Certification Authority. However, being local, it is under the control of the user and therefore, may be afforded a degree of trust. By verifying that the server is local, the client may trust the server and thus may store is certificate, even in the absence of the third-party certfication. By storing the certificate in a store of trusted certificates, the client will be able to recognise the server in the future.

The server may be a bootstrapping server and the client may be a bootstrapping configurator. In this situation, the method may advantageously used in the commissioning/configuring of devices in a network where the bootsrapping uses a service running on a local server for bootstrapping - a bootstrapping server.

It may be useful to perform an ownership check of the certificate to verify if the certificate belongs to the local server, and if the certificate belongs to the local server, proceeding with execution of the method otherwise aborting the excution of the method.

In the event that the client finds that the server is not local, it is useful to terminate the method at that point since trust cannot be built. Where the server is local, it is deemed trustworthy.

The server may be local and without a connection to a Certification Authority. Even in such a situation, the method affords the building of trust.

The client may perform a signature check of the certificate, and, if the certificate is not a self-signed certificate, performing a signature check of all certificates in the certificate chain to which the certificate belongs and if the result of the check is that at least one of the signatures is incorrect, aborting execution of the method. Unless all the signatures of the available certificates are correct, the client cannot be sure that even a local server can be trusted.

The certificate may be obtained by an out-of-band (OOB) method. The use of an OOB method increases the level of security because it allows the transfer of information that would be itself sensitive (i.e. should remain private to the devices legitimately involved) to be exchanged before the trust has been built and the encryption set up.

The OOB method may involve a QR code or NFC.

There may be configuring an enrollee for communication in a wireless network.

The bootstrapping of the enrollee may involve acquiring enrollee bootstrapping information by an OOB method.

Once trust has been established, the devices may proceed to the execution of a protocol according to Wi-Fi Device Provisioning Protocol.

The configurator device may be arranged to operate according to the method described above, and further arranged for running the local server and configuring a device for communications in a wireless network.

The bootstrapping configurator device may be arranged to function according to the method described above, and further arranged for acquiring OOB bootstrapping enrollee information and communicating the enrollee bootstrapping information to a bootstrapping service.

Aspects of the embodiments may be implemented in a computer program product, which may be a collection of computer program instructions stored on a computer readable storage device which may be executed by a computer. The instructions may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors.

Storage media suitable for storing computer program instructions include all forms of nonvolatile memory, including but not limited to EPROM, EEPROM and flash memory devices, magnetic disks such as the internal and external hard disk drives, removable disks and CD-ROM disks. The computer program product may be distributed on such a storage medium, or may be offered for download through HTTP, FTP, email or through a server connected to a network such as the Internet.

The following may be used as reference documents:
[802.11] IEEE Computer Society, "IEEE Standard for Information Technology-Telecommunications and Information Exchange Between Systems - Local and Metropolitan Area Networks - Specific requirements Part 11: Wireless LAN Medium Access Control (MAC) and Physical Layer (PHY) Specifications," (IEEE Std. 802.11-2016), December 2016
[DH] Diffie, W.; Hellman, M. (1976), "New directions in cryptography", IEEE Transactions on Information Theory, 22 (6): 644-654
[DPP] Device Provisioning Protocol - Technical Specification - Version 1.0, Wi-Fi Alliance, 2018, https://www.wi-fi.org/file-member/device-provisioning-protocol-specification.
[OSSL] https://www.openssl.org/.
[RD] The Resurrecting Duckling: Security Issues for Ad-Hoc Wireless Networks, University of Cambridge Computer Laboratory, https://www.cl.cam.ac.uk/~fms27/papers/1999-StajanoAnd-duckling.pdf
[RFC5297] Synthetic Initialization Vector (SIV) Authenticated Encryption Using the Advanced Encryption Standard (AES), October 2008, (https://datatracker.ietf.org/doc/rfc5297/)

## Claims

1. A method of gaining trust in a server in a network by a client, the network comprising a server, the method comprising:
- acquiring, by the client, a certificate of the server;
- checking whether a root certificate of a certificate chain to which the certificate belongs, or the certificate itself if it is a self-signed certificate, is in a store of trusted certificates;
- if the root certificate, or the certificate itself if it is a self-signed certificate, is not in the trusted store, checking whether the server is local to the network, and
if the server is local to the network, adding the root certificate, or the certificate itself if it is a self-signed certificate, to the store.

2. The method of claim 1 wherein the server is a bootstrapping server and the client is a bootstrapping configurator.

3. The method of either of claims 1 or2 comprising performing an ownership check of the certificate to verify if the certificate belongs to the server, and if the certificate belongs to the server, proceeding with execution of the method otherwise aborting the excution of the method.

4. The method of either of any previous claim wherein the server is without a connection to a Certification Authority.

5. The method of any previous claim, comprising by the clietnt, performing a signature check of the certificate, and, if the certificate is not a self-signed certificate, performing a signature check of all certificates in the certificate chain to which the certificate belongs and if the result of the check is that at least one of the signatures is incorrect, aborting execution of the method.

6. The method of any previous claim where the certificate is obtained by an out-of-band (OOB) method.

7. The method of claim 5, where the OOB method involves a QR code or NFC.

8. The method of any previous claim comprising configuring an enrollee for communication in a wireless network.

9. The method of claim 8, comprising bootstrapping the enrollee by acquiring enrollee bootstrapping information by an OOB method.

10. The method of any previous claim comprising the execution of a protocol according to Wi-Fi Device Provisioning Protocol.

11. A configurator device according to the method of claims 1 - 10, further arranged for running the server and configuring a device for communications in a wireless network.

12. A bootstrapping configurator device according to the method of claims 1 - 10, further arranged for acquiring OOB bootstrapping enrollee information and communicating the enrollee bootstrapping information to a bootstrapping service.

13. A computor program product arranged, when run on a computer processor, to execute the method of claims 1 - 10.
